# EUROPÄISCHE PATENTANMELDUNG

(11) **EP 0 956 892 A1**
(43) Veröffentlichungstag der Anmeldung: **17.11.1999**
(21) Anmeldenummer: 99106990.7
(22) Anmeldetag: 09.04.1999
(51) Int. Cl.: B01D 46/24

(54) **Filtergerät**

(30) Priorität: 15.05.1998 DE 29808779 U
(71) Anmelder: FESTO AG & Co, 73734 Esslingen (DE)
(72) Erfinder: Berner, Michael, 73230 Kirchheim (DE)
(74) Vertreter: Abel, Martin, Dipl.-Ing.

(57) **Zusammenfassung**

Es wird ein insbesondere zum Filtern von Druckluft in einem Druckluftnetz geeignetes Filtergerät vorgeschlagen. Es besitzt ein Gehäuse, das einen Grundkörper (8) und einen lösbar an diesem festgelegten Deckel (12) enthält, und das einen Filterraum (13) begrenzt, der eine bei abgenommenem Deckel (12) zugängliche Filterpatrone (14) aufweist. Die Filterpatrone (14) ist von dem Deckel (12) getragen und bildet mit diesem eine als Einheit handhabbare Baueinheit (16).

## Beschreibung

Die Erfindung betrifft ein Filtergerät, insbesondere zum Filtern von Druckluft in einem Druckluftnetz, mit einem Gehäuse, das einen Grundkörper und einen lösbar an diesem festgelegten Deckel enthält, und das einen Filterraum begrenzt, der eine bei abgenommenem Deckel zugängliche Filterpatrone aufweist.

Ein Filtergerät dieser Art geht beispielsweise aus dem "Pneumatic-Katalog 97/98", Seite 9.3/15-1, der Anmelderin hervor. Es wird zum Filtern von Druckluft in einem Druckluftnetz eingesetzt, wobei es einzeln verwendet werden kann oder gemeinsam mit anderen, ebenfalls zur Druckluftaufbereitung dienenden Geräten. Im allgemeinen spricht man hier von Wartungsgeräten oder Wartungseinheiten.

Das Filtergerät dient zum Filtern des hindurchströmenden Fluides, also beispielsweise der Druckluft. Diese wird dabei von Verunreinigungen und/oder von Kondenswasser, Ölaerosolen und/oder von Öldämpfen und Geruchsstoffen (Aktivkohlefilter) befreit. Über einen Einlaß gelangt das Fluid in die in der Regel hohlkörperartige Filterpatrone, welche es von innen durchströmt, wobei die oben erwähnten Partikel zurückgehalten bzw. abgeschieden werden. Anschließend tritt das Fluid über einen Auslaß aus dem Filtergerät aus.

Von Zeit zu Zeit ist ein Reinigen oder Auswechseln der verschmutzten Filterpatrone erforderlich. Im bekannten Falle wird hierzu ein von unten an einen Grundkörper angesetzter schalen- oder behälterartiger Deckel abgenommen, so daß die am Grundkörper verbleibende Filterpatrone zugänglich wird. Sie kann anschließend zur Reinigung entnommen oder durch eine saubere Filterpatrone ersetzt werden.

Die zum Reinigen und/oder Austauschen der Filterpatrone erforderlichen Arbeiten sind relativ umständlich. Es ist daher die Aufgabe der vorliegenden Erfindung, ein Filtergerät zu schaffen, bei dem sich die Filterpatrone einfacher reinigen und/oder austauschen läßt.

Zur Lösung dieser Aufgabe ist vorgesehen, daß die Filterpatrone von dem Deckel getragen ist und mit diesem eine als Einheit handhabbare Baueinheit bildet.

Auf diese Weise besteht die Möglichkeit zur gemeinsamen Handhabung von Filterpatrone und Deckel. Der Deckel hat eine Doppelfunktion, zum einen als Verschlußelement für den Filterraum und zum andern gleichzeitig als Träger für die Filterpatrone, wobei er auch zur Weiterleitung der Druckluft dienen kann. Wird der Deckel entfernt, hat dies ein gleichzeitiges Entfernen der Filterpatrone zur Folge, so daß man nicht mehr gezwungen ist, zwei oder mehrere Bauteile separat und unabhängig voneinander handzuhaben.

Vorteilhafte Weiterbildungen der Erfindung gehen aus den Unteransprüchen hervor.

Der Deckel und die Filterpatrone können unlösbar fest miteinander verbunden sein. Diese Lösung bietet sich bei wiederverwendbaren Filterpatronen an, die nach Reinigung erneut in den Filterraum eingesetzt werden.

Bei einer alternativen Bauform ist die Filterpatrone abnehmbar am Deckel fixiert. Dies ermöglicht einen einfachen Austausch einer verschmutzten Filterpatrone und die Wiederverwendung des Deckels.

Zweckmäßigerweise ist die Filterpatrone-Deckel-Baueinheit ausschließlich über den Deckel am Grundkörper festgelegt. Die Befestigung erfolgt vorzugsweise durch eine zwischen dem Deckel und dem Grundkörper wirkende Schraub- oder Renkverbindungseinrichtung, wobei letztere zweckmätßigerweise als Bajonettverbindungseinrichtung ausgestaltet wird.

Eine besonders gute Zugänglichkeit für die Filterpatrone bei vom Grundkörper abgenommener Baueinheit stellt sich ein, wenn der Deckel scheibenähnlich mit Flachgestalt ausgeführt ist und die Filterpatrone säulenartig von dem Deckel absteht. Speziell in diesem Zusammenhang ist es von Vorteil, wenn der Filterraum ausschließlich in dem Grundkörper ausgebildet ist.

In bevorzugter Gebrauchslage des Filtergerätes liegt zweckmäßigerweise eine Orientierung vor, bei der die bei abgenommenem Deckel am Grundkörper freigegebene Öffnung des Filterraumes nach oben weist, wobei die Filterpatrone in nach unten hängender Konfiguration am Deckel angeordnet ist. Montage und Demontage der Filterpatrone-Deckel-Baueinheit können in diesem Falle bequem von oben her erfolgen. Zwar gehen aus der DE-GM 1 821 529 und aus der DE 84 04 256 U1 bereits Filtergeräte hervor, bei denen sich die Filterpatrone von oben her austauschen läßt. Auch hier ist aber die Filterpatrone ein bezüglich des Deckels separates Bauteil, das getrennt handzuhaben ist.

In der Regel wird das Filtergerät nur einen Filterraum mit zugeordneter Filterpatrone-Deckel-Baueinheit aufweisen. Es sind allerdings durchaus auch Bauformen möglich, bei denen mehrere entsprechend ausgestattete Filtereinheiten vorhanden sind, die funktionell hintereinandergeschaltet oder vorzugsweise, zur Vergrößerung der Durchflußwerte, parallelgeschaltet sein können.

Nachfolgend wird die Erfindung anhand der beiliegenden Zeichnung näher erläutert. Es zeigen im einzelnen:
- Fig. 1: eine bevorzugte Bauform des erfindungsgemäßen Filtergerätes in Gebrauchsposition im in ein Druckluftnetz eingeschalteten Zustand und
- Fig. 2: das Filtergerät aus Fig. 1, wobei eine Filterpatrone-Deckel-Baueinheit entnommen ist.

Das in seiner Gesamtheit mit Bezugsziffer 1 bezeichnete Filtergerät des Ausführungsbeispiels verfügt über zwei fest miteinander verbundene Filtereinheiten 2, 2'. Diese Bauform ist vorliegend gewählt, um eine Filteranordnung zu erhalten, die über eine hohe Durchflußleistung verfügt. In den meisten Fällen wird das Filtergerät 1 über nur eine Filtereinheit 2 verfügen, so daß sich die Baugröße auf die Hälfte verringert und eine Gestaltung vorliegt, die sich etwa ergibt, wenn man sich das Filtergerät 1 an der strichpunktiert markierten Trennebene 3 unterteilt vorstellt.

Das Filtergerät 1 dient vorliegend zum Filtern von Druckluft, die durch die Rohrleitung 4 eines Druckluftnetzes strömt. In Gebrauchsstellung ist das Filtergerät 1 so in die Rohrleitung 4 eingeschaltet, daß ein Rohrleitungsabschnitt an einer Einlaßöffnung 5 und ein weiterer Rohrleitungsabschnitt an einer Auslaßöffnung 6 des Filtergerätes 1 angeschlossen ist.

Das Filtergerät 1 enthält pro Filtereinheit ein Gehäuse 7 mit einem Grundkörper 8 und einem Deckel 12. Im vorliegenden Fall sind die beiden Filtereinheiten 2 durch einstückige Ausgestaltung ihrer Grundkörper 8 zu einer Einheit zusammengefaßt.

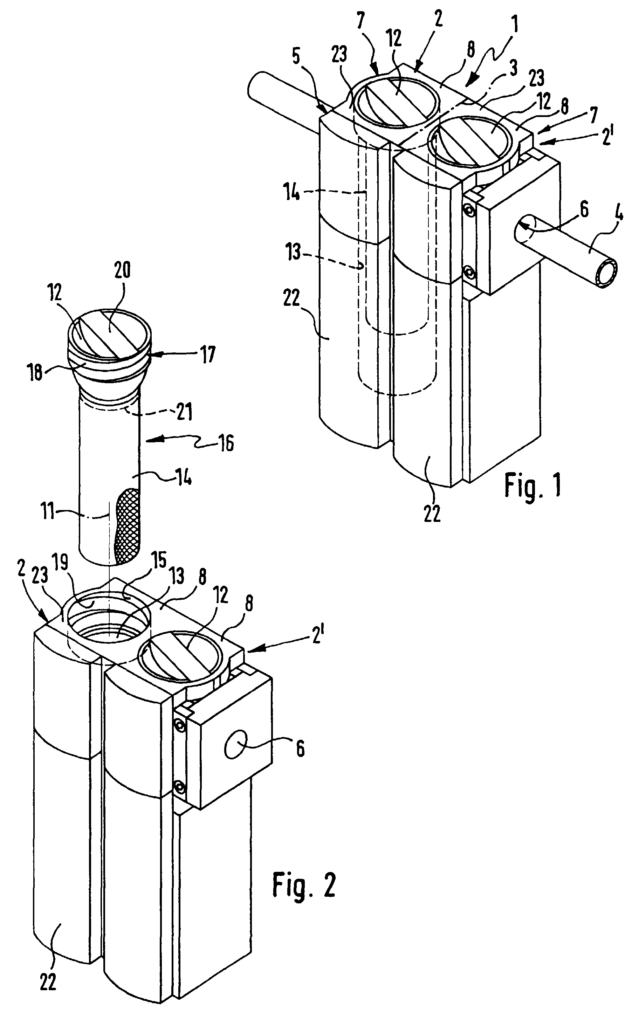

Jeder Grundkörper 8 definiert gemeinsam mit dem an ihm angeordneten Deckel 12 einen im Innern des Gehäuses 7 befindlichen Filterraum 13. Dieser ist in Fig. 1 der Übersichtlichkeit halber nur bezüglich einer Filtereinheit 2 gestrichelt angedeutet.

In dem Filterraum 13 ist eine zum Beispiel zylindrisch oder hohlzylindrisch gestaltete Filterpatrone 14 angeordnet. Sie besteht aus geeignetem Filtermaterial, beispielsweise in Faserform, das feine Durchlässe definiert, so daß ein im weitesten Sinne siebähnlicher Aufbau vorhanden sein kann.

Die Einlaßöffnung 5 und die Auslaßöffnung 6 befinden sich an jeweils einem der Grundkörper 8. Die Druckluft tritt an der Einlaßöffnung 5 in das Filtergerät 1 ein, durchströmt die Filterpatronen 14 und die diese aufnehmenden Filterräume 13 und tritt durch die Auslaßöffnung 6 wieder aus. Es versteht sich, daß bei einem nur eine Filtereinheit aufweisenden Filtergerät 1 die Einlaßöffnung 5 und Auslaßöffnung 6 an ein und demselben Grundkörper 8 auf insbesondere entgegengesetzten Seiten vorgesehen sind.

Beim Hindurchströmen durch die Filterpatrone 14 wird die Druckluft gereinigt. Feststoffpartikel und/oder Öldämpfe und Geruchsstoffe werden zurückgehalten, und Flüssigkeiten, insbesondere Kondenswasser und/oder Ölaerosole, werden abgeschieden. Bei Bedarf kann der Filterpatrone noch eine besondere Abscheideeinrichtung zugeordnet sein.

Feststoffverunreinigungen und/oder Ölrückstände (Aktivkohlefilter) bleiben in der Regel an der Filterpatrone 14 haften. Flüssigkeitsrückstände sammeln sich im Filterraum 13 an, der daher in der Regel mit einer manuell oder (halb-)automatisch betätigten Ablaßeinrichtung ausgestattet ist, die von Zeit zu Zeit oder kontinuierlich eine Entleerung ermöglicht.

Ein jeweiliger Filterraum 13 hat wie die zugehörige Filterpatrone 14 eine längliche Erstreckung, wobei die Längsachse 11 rechtwinkelig zur gedachten Verbindungslinie zwischen der Einlaßöffnung 5 und der Auslaßöffnung 6 verläuft. Die Druckluft wird daher beim Hindurchströmen durch das Filtergerät 1 ein- oder mehrfach umgelenkt.

Der Aufbau eines jeweiligen Gehäuses 7 ist vorzugsweise so getroffen, daß sich der Filterraum 13 mit seinem gesamten oder zumindest annähernd seinem gesamten Volumen im Innern des jeweiligen Grundkörpers 8 befindet. Er ist unten und seitlich von zum Grundkörper 8 gehörenden Wänden dicht umschlossen. Seine einzige Öffnung 15 weist nach oben und ist im Betrieb des Filtergerätes 1 durch einen der schon erwähnten Deckel 12 lösbar dicht verschlossen. Dieser Zustand liegt in Fig. 1 sowie bei der in Fig. 2 rechts abgebildeten Filtereinheit 2' vor.

Die beiden Grundkörper 8 können im Bodenbereich durch Öffnungen miteinander verbunden werden, so daß die in jedem Grundkörper anfallenden Flüssigkeitsrückstände zusammengefaßt über nur eine manuelle oder (halb-)automatisch betätigte Ablaßeinrichtung entleert werden können.

Ein jeweiliger Deckel 12 und die ihm zugeordnete Filterpatrone 14 sind zu einer Baueinheit zusammengefaßt, so daß sie gemeinsam als Einheit handhabbar sind. Somit ergibt sich in anderen Worten allein durch Handhabung des Deckels 12 eine gleichzeitige Handhabung der Filterpatrone 14. Durch Abnehmen des Deckels 12 läßt sich also gleichzeitig die Filterpatrone 14 aus dem Filterraum 13 entnehmen, wie auch beim erneuten Anbringen des Deckels 12 am Grundkörper 8 ein gleichzeitiges Einsetzen der Filterpatrone 14 in den Filterraum 13 stattfindet. Die Filterpatrone-Deckel-Baueinheit 16 läßt sich beim Ausführungsbeispiel bequem mit einer Hand manipulieren.

Der Deckel 12 ist beim Ausführungsbeispiel als verhältnismäßig flacher, scheibenartiger Körper ausgeführt, an dessen einer Scheibenfläche die Filterpatrone 14 derart angeordnet ist, daß sie säulenähnlich vom Deckel 12 absteht. In der Gebrauchsstellung des Ausführungsbeispiels ergibt sich dabei eine Konfiguration mit ausgehend vom Deckel 12 nach unten hängender Filterpatrone 14.

Bei montierter Baueinheit 16 ist der Deckel 12 unter Verschluß der Öffnung 15 am Grundkörper 8 lösbar festgelegt. Die Filterpatrone 14 ragt dabei hängend von oben her in den Filterraum 13 hinein, wobei sie ausschließlich über den Deckel 12 am Grundkörper 8 festgelegt ist. Weitere Befestigungsmaßnahmen sind nicht erforderlich.

Die Befestigung des Deckels 12 erfolgt beim Ausführungsbeispiel über eine Schraubverbindungseinrichtung 17. Hierzu kann der Deckel 12 am Außenumfang ein Außengewinde 18 tragen, mit dem er sich in ein am Innenumfang der Öffnung 15 vorgesehenes Innengewinde 19 lösbar einschrauben läßt. Alternativ hierzu wäre auch eine Renkverbindungseinrichtung denkbar und dabei insbesondere eine Bajonettverbindungseinrichtung. Auch eine reine Steckverbindung ließe sich realisieren. Jedenfalls ist von Vorteil, daß die Montage und Demontage der Baueinheit 16 ohne Werkzeuge rein manuell erfolgen können, zu welchem Zweck an der bei montiertem Deckel 12 außenliegenden Deckelfläche mindestens ein Handhabungsmittel 20 vorgesehen ist, an dem sich die Baueinheit 16 beim Ein- und Herausschrauben sowie bei den sonstigen Handhabungen halten und betätigen läßt.

Die Filterpatrone 14 kann unlösbar fest mit dem Deckel 12 verbunden sein. Eine hierzu alternative Bauform ist beim Ausführungsbeispiel vorgesehen, wo die Filterpatrone 14 abnehmbar an dem Deckel 12 fixiert ist. Bei 21 sind strichpunktiert zum Beispiel als Rastverbindungsmittel oder als reine Steckverbindungsmittel ausgestattete Verbindungsmittel angedeutet, über die die Filterpatrone 14 am Deckel 12 befestigt ist.

Zwischen dem Deckel 12 und dem Grundkörper 8 ist zweckmäßigerweise noch eine nicht näher dargestellte Dichtungseinrichtung vorhanden, die zweckmäßigerweise entweder am Deckel 12 oder an der Öffnung 15 des Grundkörpers 8 unverlierbar festgelegt ist.

Soll eine Filterpatrone 14 gereinigt werden, läßt sie sich gemeinsam mit dem Deckel 12 aus dem Grundkörper 8 entnehmen. Dabei kann sie während der Reinigung über den Deckel 12 festgehalten werden. Bei Bedarf ist aber auch ein einfacher Austausch dadurch möglich, daß anstelle einer verschmutzten Filterpatrone 14 eine neue Filterpatrone über die Verbindungsmittel 21 am Deckel 12 angebracht wird. Anschließend läßt sich die gesamte Baueinheit 16 wieder gemeinsam in den Filterraum 13 einführen und am Grundkörper 8 fixieren.

Sind wie beim Ausführungsbeispiel mehrere Filtereinheiten 2 funktionell gekoppelt, bietet sich außer einer Reihenschaltung insbesondere eine Parallelschaltung derart an, daß die das Filtergerät 1 passierende Druckluft in Teilströme aufgeteilt wird, die die Filterpatronen 14 parallel durchströmen. Auf diese Weise läßt sich auch bei bedingt durch die Verwendung feinster Filter vorhandene hohe Strömungswiderstände eine hohe Durchflußrate realisieren bzw. die Reinigungs-/Wechsel-Intervalle der Filterpatronen verlängern.

Es sei noch zu erwähnen, daß der Grundkörper 8 nach Bedarf ein- oder mehrteilig ausgeführt sein kann. Eine mehrteilige Bauform bietet sich dann an, wenn weiterhin vergleichbar konventionellen Bauformen ein schalen- bzw. behältnisartiges Aufnahmeelement 22 gewünscht wird, das sich im Bereich der Unterseite des Filtergerätes 1 befindet und zumindest den unteren Abschnitt des Filterraumes 13 definiert. Es kann lösbar an einem Tragelement 23 angeordnet sein, an dem sich die Einlaßöffnung 5 und/oder Auslaßöffnung 6 befindet und das den oberen Abschnitt des Filterraumes 13 definieren kann. Die Öffnung 15 befindet sich in diesem Falle an der Oberseite des Tragelementes 23, an dem auch der Deckel 12 angeordnet ist. Eine derartige Ausgestaltung ermöglicht das Reinigen und/oder Austauschen der Filterpatrone 14, ohne gleichzeitige Notwendigkeit zum Abnehmen des das Kondensat aufnehmenden Aufnahmeelementes 22.

## Patentansprüche

1. Filtergerät, insbesondere zum Filtern von Druckluft in einem Druckluftnetz, mit einem Gehäuse (7), das einen Grundkörper (8) und einen lösbar an diesem festgelegten Deckel (12) enthält, und das einen Filterraum (13) begrenzt, der eine bei abgenommenem Deckel (12) zugängliche Filterpatrone (14) aufweist, dadurch gekennzeichnet, daß die Filterpatrone (14) von dem Deckel (12) getragen ist und mit diesem eine als Einheit handhabbare Baueinheit (16) bildet.

2. Filtergerät nach Anspruch 1, dadurch gekennzeichnet, daß der Deckel (12) und die Filterpatrone (14) unlösbar fest miteinander verbunden sind.

3. Filtergerät nach Anspruch 1, dadurch gekennzeichnet, daß die Filterpatrone (14) abnehmbar an dem Deckel (12) fixiert ist.

4. Filtergerät nach einem der Ansprüche 1 bis 3, dadurch gekennzeichnet, daß die Filterpatrone-Deckel-Baueinheit (16) ausschließlich über den Deckel (12) am Grundkörper (8) festgelegt ist.

5. Filtergerät nach einem der Ansprüche 1 bis 4, gekennzeichnet durch eine zwischen dem Deckel (12) und dem Grundkörper (8) vorgesehene Schraub- oder Renkverbindungseinrichtung (17).

6. Filtergerät nach einem der Ansprüche 1 bis 5, gekennzeichnet durch einen scheibenähnlichen Deckel (12), von dem die Filterpatrone (14) säulenähnlich absteht.

7. Filtergerät nach einem der Ansprüche 1 bis 6, dadurch gekennzeichnet, daß der Filterraum (13) in dem Grundkörper (8) ausgebildet ist.

8. Filtergerät nach einem der Ansprüche 1 bis 7, dadurch gekennzeichnet, daß die bei abgenommenem Deckel (12) am Grundkörper (8) freigegebene Öffnung des Filterraumes (13) nach oben weist, wobei die Filterpatrone (14) hängend nach unten ragend am Deckel angeordnet ist.

9. Filtergerät nach einem der Ansprüche 1 bis 8, gekennzeichnet durch mehrere funktionell insbesondere parallelgeschaltete Filtereinheiten, die jeweils über eine Filterpatrone-Deckel-Baueinheit (16) verfügen.
